# EUROPÄISCHE PATENTSCHRIFT

(11) **EP 2 877 798 B1**
(45) Veröffentlichungstag und Bekanntmachung des Hinweises auf die Patenterteilung: **08.04.2020**
(21) Anmeldenummer: 13750003.9
(22) Anmeldetag: 24.07.2013
(51) Int. Cl.: F27B 17/02, A61C 13/20, F27D 19/00, F27D 21/00

(54) **SINTEROFEN FÜR BAUTEILE AUS EINEM SINTERWERKSTOFF, INSBESONDERE FÜR DENTALBAUTEILE UND VERFAHREN ZUR SINTERUNG DERARTIGER BAUTEILE**
SINTERING FURNACE FOR COMPONENTS MADE OF A SINTERED MATERIAL, IN PARTICULAR FOR DENTAL COMPONENTS, AND METHOD FOR SINTERING SUCH COMPONENTS
FOUR DE FRITTAGE POUR ÉLÉMENTS EN MATÉRIAU FRITTÉ, EN PARTICULIER POUR ÉLÉMENTS DENTAIRES, ET PROCÉDÉ DE FRITTAGE DE TELS ÉLÉMENTS

(30) Priorität: 27.07.2012 DE 102012213279; 27.07.2012 US 201261676647 P
(43) Veröffentlichungstag der Anmeldung: 03.06.2015
(73) Patentinhaber: Sirona Dental Systems GmbH, 64625 Bensheim (DE)
(72) Erfinder: SCHMIDT, Christian, 64625 Bensheim (DE); FIGGE, David, 64625 Bensheim (DE); GLEDITZSCH, Siegfried, 64646 Heppenheim (DE); FORNOFF, Peter, 64385 Reichelsheim (DE)
(74) Vertreter: Özer, Alpdeniz
(86) Internationale Anmeldenummer: PCT/EP2013/065566
(87) Internationale Veröffentlichungsnummer: WO 2014/016320

(56) Entgegenhaltungen:
- DE-A1- 3 231 546
- DE-A1- 4 340 200
- DE-A1- 19 824 497
- DE-A1-102006 032 655

## Beschreibung

### Technisches Gebiet

Die Erfindung betrifft einen Sinterofen für Bauteile aus einem Sinterwerkstoff, insbesondere für Dentalbauteile und insbesondere für Bauteile aus Keramik und ein Verfahren zur Sinterung derartiger Bauteile. Bauteile für dentale Restaurationen haben im Vergleich zu technischen Bauteilen ein geringes Volumen, geringe Wandstärken und kleine Bauteilquerschnitte.

### Stand der Technik

Entscheidend für die Gestaltung eines Sinterofens ist das zu sinternde Material. Gesintert werden grundsätzlich metallische oder keramische Formkörper, die aus einem Pulver gepresst wurden und die eventuell entweder direkt oder nach einem Ansinterprozess durch einen Fräs- oder Schleifprozess weiterverarbeitet wurden. Das Material bestimmt das notwendige Temperaturprofil. Die Größe und die Menge der Bauteile bestimmt die Baugröße des Ofens, ebenso das Temperaturprofil. Je heißer der Ofen sein soll, umso dickwandiger ist die Isolation. Die Baugröße des Ofens, der Bauteile und die gewünschte Aufheizgeschwindigkeit bestimmen die Auslegung des Heizsystems und des Regelverhaltens. Dabei spielt auch die Stromversorgung eine Rolle. Letztendlich unterscheidet vor allem die Baugröße einen Dentalofen für ein Labor von einem Industriesinterofen.

Wärmebehandlungsprozesse, insbesondere das vollständige Sintern von dentalen Restaurationen aus vorgesinterten Keramiken oder Metallen unter Verwendung eines Sinterofens dauern heute zwischen 80 min und mehreren Stunden. Der Herstellungsprozess einer dentalen Restauration, die sowohl vorbereitende Schritte als auch nachfolgende Schritte erfordert, wird durch diesen Zeitbedarf eines Einzelschritts nachhaltig unterbrochen. So benötigt das sogenannte Speed-Sintern für Zirkonoxid minimal 80 min. Eine Verkürzung der Prozessdurchlaufzeit ist heute nur möglich, wenn ein alternatives Material zum Einsatz kommt, welches entweder eine wesentlich kürzere Wärmebehandlung benötigt oder gar keine Wärmebehandlung erfordert.

Aus dem Stand der Technik ist ein Sinterofen bekannt, der eine beheizbare Ofenkammer für das zu sinternde Bauteil umfasst, wobei die Ofenkammer einen zu öffnenden Wandabschnitt zum Einbringen des zu sinternden Bauteils in die Ofenkammer aufweist. Zum motorischen Öffnen und Schließen des Wandabschnitts sind Antriebsmittel vorgesehen, und wobei eine Steuerung für die Antriebsmittel vorgesehen ist, welche ein Bedienelement für die Antriebsmittel aufweist. Weiterhin ist eine Aufheizvorrichtung für die Ofenkammer vorgesehen und die Steuerung bewirkt die Aufheizung der Ofenkammer.

Ein derartiger Sinterofen wurde von der Sirona Dental Systems GmbH in Bensheim, Deutschland unter der Bezeichnung inFire HTC speed im Januar 2011 in Deutschland auf den Markt gebracht. Mit diesem Sinterofen soll der CAD/CAM-Prozess im Labor erheblich beschleunigt werden, indem sich der Sintervorgang bei Gerüsten aus Zirkoniumdioxid um bis zu 75 Prozent reduziert. Erzielt wird dieser Zeitvorteil durch besondere Heizelemente, die Innenisolation und die Sinterunterlagen wie Schalen sowie prismatische oder zylindrische Formkörper mit planparallelen Grund- und Beladeflächen.

Mit diesem Sinterofen können bis zu fünfgliedrige Brückengerüste aus Zirkoniumdioxid in 90 Minuten dichtgesintert werden. So ist die Herstellung einer computergestützt verblendeten Multilayer-Brücke innerhalb eines Tages möglich. Darüber hinaus besteht die Wahl zwischen regulären und Schnell-Sinterprogrammen abhängig von dem Materialtyp der jeweils vorgegebenen Sinterkeramik. Unabhängig vom genau angegebenen Materialtyp können weitere Langzeit- und Schnellsinterprogramme individuell programmiert werden. Darüber hinaus ist eine Zeitwahlfunktion vorgesehen, welche dem Zahntechniker auch das Sintern über Nacht ermöglicht. Kürzere Heiz- und Abkühlzeiten sorgen grundsätzlich dafür, dass das Gerät eine deutlich bessere Energie-Effizienz erreicht.

Aus der WO 2012/057829 A2 ist bekannt, ein Zahnersatzteil auf einer Führung in einem über einen Dichtflansch geöffneten Reaktor so zu platzieren, dass das Zahnersatzteil im Zentrum einer Magnetspule angeordnet ist. Durch Aufheizen mittels Induktion oder durch Zünden eines mikrowelleninduzierten Plasmas wird die Sinterzeit von Stunden auf Minuten verringert. Als Koppelmedium wird Zirkonoxid angegeben, was für diesen Zweck ungeeignet ist, weil das Material erst ab ca. 800°C nutzbar elektrisch leitend wird. Dokument DE19824497A1 ist ein weiteres Dokument des Standes der Technik.

Basierend auf den Erfahrungen von der industriellen Fertigung keramischer oder pulvermetallurgischer Bauteile werden die Wärmebehandlungsprozesse wie das Sintern konservativ eingestellt. Es ist immer wichtig, dass die Durchwärmung der Bauteile stets dem Temperaturverlauf des Ofens folgt, um Temperaturgradienten zu vermeiden, da Temperaturgradienten je nach Ausprägung zu einer ungleichmäßigen Ausbildung der Werkstoffeigenschaften führen und die Ursache für geometrische Verzüge sein können.

Die Aufgabe der vorliegenden Erfindung besteht daher darin, die Herstellungszeit weiter zu verkürzen und dabei jedoch die Werkstoffeigenschaften des gesinterten Bauteils so zu erhalten, dass es die Anforderungen noch immer erfüllt.

### Darstellung der Erfindung

Der erfindungsgemäße Sinterofen für Bauteile aus einem Sinterwerkstoff, insbesondere für Dentalbauteile und insbesondere für Bauteile aus Keramik, umfasst eine beheizbare Ofenkammer für das zu sinternde Bauteil, wobei die Ofenkammer einen zu öffnenden Wandabschnitt zum Einbringen des zu sinternden Bauteils in die Ofenkammer aufweist, wobei eine Steuerung vorgesehen ist, über welche die Aufheizung der Ofenkammer mittels einer Aufheizvorrichtung für die Ofenkammer gesteuert ist. Die Steuerung weist Mittel auf, mit denen die Zeitdauer einer Ladesequenz mit den Schritten Öffnen, Halten und Schließen des Wandabschnitts jeweils bei aufgeheizter Ofenkammer einzeln oder insgesamt und/oder mit denen der Temperaturabfall in der Ofenkammer während der Schritte wiederum einzeln oder insgesamt erfassbar ist und in der Steuerung sind mehrere sich an die Ladesequenz anschließende vorgegebene Temperaturprofile für die Ofenkammer abgespeichert, von denen eines über in der Steuerung vorgesehene Auswahl- oder Vergleichsmittel in Abhängigkeit der Zeitdauer der Schritte einzeln oder insgesamt und/oder des Temperaturabfalls in der Ofenkammer während der Schritte wiederum einzeln oder insgesamt aus einem Speicherbereich auswählbar ist.

Als Mittel für die Erfassung der Zeitdauer der Ladesequenz mit den Schritten Öffnen, Halten und Schließen des Wandabschnitts jeweils bei aufgeheizter Ofenkammer einzeln oder insgesamt kommen Zeitmesser in Betracht, die mit der Bewegung des Wandabschnitts automatisch ausgelöst werden oder die erfassen, wenn der Wandabschnitt eine Endlage verlassen und/oder erreicht hat. Der Temperaturabfall in der Ofenkammer während der Schritte wiederum einzeln oder insgesamt kann über Temperaturmessgerät erfasst werden, die mit der Bewegung des Wandabschnitts automatisch abgelesen werden oder die dann abgelesen werden, wenn der Wandabschnitt eine Endlage verlassen und/oder erreicht hat. Anstelle einer Auswahl eines bestimmten Temperaturprofils kann auch aus mehreren vorhandenen Temperaturprofilen ein passendes Temperaturprofil berechnet werden Vorteilhafterweise kann ein mit der Steuerung zusammenwirkendes Bedienelement vorgesehen sein, wobei das Betätigen des Bedienelements die Erfassung der Zeitdauer und/oder des Temperaturabfalls mittels der Steuerung auslöst.

Weiterhin können Antriebsmittel zum motorischen Öffnen und Schließen des Wandabschnitts vorgesehen sein, wobei die Antriebsmittel mittels eines Bedienelements über die Steuerung entsprechend der Ladesequenz betätigt sind.

Ein weiterer erfindungsgemäßer Sinterofen für Bauteile aus einem Sinterwerkstoff, insbesondere für Dentalbauteile und insbesondere für Bauteile aus Keramik, umfasst eine beheizbare Ofenkammer für das zu sinternde Bauteil, wobei die Ofenkammer einen zu öffnenden Wandabschnitt zum Einbringen des zu sinternden Bauteils in die Ofenkammer aufweist. Zum motorischen Öffnen und Schließen des Wandabschnitts sind Antriebsmittel und eine Steuerung für die Antriebsmittel vorgesehen, welche ein Bedienelement für die Antriebsmittel aufweist. Weiterhin ist eine Aufheizvorrichtung für die Ofenkammer vorgesehen und die Steuerung bewirkt die Aufheizung der Ofenkammer. Um die Zeitdauer für die Durchführung des Sintervorganges zu optimieren, weist die Steuerung eine vorgegebene automatische Ladesequenz für die Antriebsmittel mit den Schritten Öffnen, Halten und Schließen des Wandabschnitts sowie zur Festlegung einer Aufheizung der Ofenkammer auf. Das Betätigen des Bedienelements löst die Ladesequenz der Steuerung aus und die Antriebsmittel sind über die Steuerung automatisch entsprechend der Ladesequenz betätigt.

Durch die genau definierte Ladesequenz ist die Abkühlung der Ofenkammer und der damit einhergehende Temperaturverlust weitgehend bekannt, sodass das Aufheizverhalten des zu sinternden Bauteils, das in der Regel bei Raumtemperatur über den geöffneten heißen Wandabschnitt in die Ofenkammer eingebracht wird, ebenfalls weitgehend bekannt ist.

Vorteilhafterweise kann der zu öffnende Wandabschnitt als Ablage für das Bauteil ausgebildet sein und in geöffnetem Zustand eine beheizte Abkühlzone bilden, die in einem Abstand zu der Ofenkammer angeordnet ist. Das auf der Ablage angeordnete Bauteil kann bei geöffnetem Wandabschnitt mittels der Ofenkammer beheizt sein oder über eine separate Heizeinrichtung verfügen. Die Steuerung kann eine Abkühlsequenz zum Öffnen des Wandabschnitts nach dem Sintervorgang und zum Halten des Wandabschnitts in der Abkühlzone sowie zur Festlegung der Aufheizung der Ofenkammer oder der separaten Heizeinrichtung aufweisen und es kann ein mittels der Steuerung aktivierbares Kontrollsignal vorhanden sein, das das Erreichen einer Abkühltemperatur in der Abkühlzone oder in der Ofenkammer anzeigt.

Die Verwendung einer beheizten Abkühlzone mit definierten Bedingungen im Abkühlprozess ermöglicht einen zeitoptimierten reproduzierbaren Ablauf verringert die Gefahr eines zu schnellen Abkühlens, auch als Thermoschocks bekannt, wodurch Materialschädigungen verhindert werden.

Um eine kurze Zeitdauer zu ermöglichen, kann die Aufheizvorrichtung als Widerstandsheizung ausgebildet sein, so dass die Ofenkammer nach der Ladesequenz eine Aufheizrate von mindestens im Mittel 1,0 °C/s und höchstens 6°C/s als Maximalwert aufweist. Die Heizelemente der Widerstandsheizung können dabei von Anfang an mit einer maximalen möglichen Stromaufnahme betrieben werden.

Vorteilhafterweise kann die Steuerung ein Eingabemittel aufweisen, um ein Temperaturprofil abhängig von einer Baugröße des Bauteils oder geometrischen Merkmalen wie eine maximale Wandstärke oder ein maximaler Bauteilquerschnitt oder ein Volumen des zu sinternden Bauteils, eine Materialart des zu sinternden Bauteils oder eine Kombination mehrerer davon auszuwählen.

Dies hat den Vorteil, dass eine Anpassung des Sinterverlaufs an das zu sinternde Bauteil durch ein zeitoptimales Temperaturprofil möglich ist.

Vorteilhafterweise kann die Steuerung ein Auswertemittel für einen Strichkode und/oder eine sonstige maschinenlesbare Kennung mit Informationen über das zu sinternde Bauteil aufweisen, um ein Temperaturprofil unter Berücksichtigung einer Baugröße des Bauteils oder geometrischen Merkmalen wie eine maximale Wandstärke oder ein maximaler Bauteilquerschnitt oder ein Volumen des zu sinternden Bauteils, eine Materialart des zu sinternden Bauteils oder eine Kombination mehrerer davon automatisch festzulegen.

Aus der Geometrie des zu sinternden Bauteils sind die Abmessungen, das Volumen, die Wandstärken und die Querschnittsflächen bekannt. Über ein zu bestimmendes empirisches Prozessmodell können den genannten Variablen und den Kombinationen daraus Temperaturprofile zugeordnet oder Temperaturprofile erzeugt werden.

Die Erfindung betrifft weiterhin ein Verfahren zur Sinterung von Bauteilen aus einem Sinterwerkstoff, insbesondere von Dentalbauteilen in einem Sinterofen, umfassend die folgenden Schritte:
a) Öffnen eines Wandabschnitts der Ofenkammer mit vorgeheizter Ofenkammer bei eingeschalteter Ofenheizung;
b) Beladen der Ofenkammer, insbesondere durch Anbringen des auf einem Träger angeordneten zu sinternden Bauteils außerhalb der Ofenkammer auf dem geöffneten Wandabschnitt;
c) Schließen der Ofenkammer
d) Aufheizen der Ofenkammer bis zu einer Haltetemperatur während einer Zeitdauer HU2;
e) Aufrechterhalten der Haltetemperatur während einer Zeitdauer H;
f) Öffnen der Ofenkammer, entweder bei ausgeschalteter Ofenheizung oder bei eingeschalteter Ofenheizung;
g) für eine erste Abkühlstufe Verbringen des Bauteils mit dem Träger in eine beheizte erste Abkühlzone und Verbleib für eine Abkühlzeitdauer CD1;
h) für eine zweite Abkühlstufe Verbringen des Bauteils mit dem Träger aus der ersten Abkühlzone in eine zweite Abkühlzone und Verbleib für eine Abkühlzeitdauer CD2;
i) Entfernen des Bauteils vom Träger und Verbringen des Bauteils in eine dritte Abkühlzone für die dritte Abkühlstufe durch Ablegen auf eine Unterlage mit im wesentlichen Raumtemperatur sowie Verweilen für eine Abkühlzeitdauer CD3,
j) wobei
   1. die Schritte a)-c) für eine Zeitdauer L von maximal 2 Minuten, vorzugsweise 1 Minute;
   2. der Schritt d) für die Zeitdauer HU2 von maximal 8 Minuten, vorzugsweise 4-5 Minuten
   3. der Schritt e) für die Zeitdauer H von maximal 15 Minuten, vorzugsweise 4-8 Minuten;
   4. der Schritt f) und g) für die Abkühlzeitdauer CD1 von mindestens 0,5 Minuten, höchstens jedoch 5 Minuten;
   5. der Schritt h) für eine Abkühlzeitdauer CD2 von 1-5 Minuten;
   6. der Schritt i) für eine Abkühlzeitdauer CD3 von mindestens 0,5 Minuten, höchstens jedoch 10 Minuten
   durchgeführt wird.

Mit einem nach einem derartigen Verfahren betriebenen Sinterofen lassen sich Herstellungszeiten von maximal 35 Minuten realisieren, in den jeweils angegebenen vorzugsweisen Bereichen können Gesamtzeiten von 15-20 Minuten realisiert werden. Eine derartige Verkürzung der Prozesszeit für die Wärmebehandlung wirkt sich unmittelbar im Umfang der Zeitersparnis auf die Verringerung der Prozessdurchlaufzeit aus. Dadurch ist eine nahezu unterbrechungsfreie Herstellung eines Zahnersatzteils möglich.

Die Wärmebehandlung ist stark abhängig vom Bauteilvolumen und Gestaltungsmerkmalen wie Wandstärke und Bauteilquerschnitt. Daher kann es vorteilhaft sein, wenn über ein Auswertemittel für einen Strichkode und/oder eine sonstige maschinenlesbare Kennung mit Informationen über eine Baugröße des Bauteils oder geometrische Merkmale wie eine maximale Wandstärke oder ein maximaler Bauteilquerschnitt oder ein Volumen des zu sinternden Bauteils, eine Materialart des zu sinternden Bauteils oder eine Kombination mehrerer davon des zu sinternden Bauteils Informationen automatisch ausgewertet werden und ein Temperaturprofil automatisch bestimmt wird.

Als Typen des zu sinternden Bauteils kommen für den Dentalbereich insbesondere in Frage, wobei die Aufzählung nicht abschließend ist: Inlays, Onlays, Veneers, Kronenkappen, Vollkronen, Brückengerüste, vollanatomisch gestaltete Brücken, Implantat-Abutments.

Vorteilhafterweise können die jeweiligen Zeitdauern aus den Schritten a) bis i) über das Auswertemittel aus Informationen über das zu sinternde Bauteil automatisch bestimmt werden, insbesondere die Zeitdauer H aus Schritt e), wobei eine maximale Wandstärke des zu sinternden Bauteils, ein Volumen des zu sinternden Bauteils, eine Materialart oder der Typ des zu sinternden Bauteils oder eine Kombination mehrerer davon automatisch ausgewertet werden.

Wenn die beheizte Abkühlzone der ersten Abkühlstufe durch den Sinterofen, insbesondere durch die Ofenkammer beheizt wird, kann eine kontrollierte erste Abkühlzone bereitgestellt werden.

Vorteilhafterweise kann das Verfahren bei Bauteilen aus sinterfähigen Oxidkeramiken oder Glaskeramiken sowie sinterfähige, pulvermetallurgisch hergestellte NEM-Materialien insbesondere auf der Basis von CoCr, CoCrMo, CoCrW oder CoCrMoW verwendet werden.

Darüber hinaus ist es vorteilhaft, mittels des Verfahrens zahntechnische Bauteile aus Zirkonoxid und transluzentem Zirkonoxid mit Wanddicken von 0,1 bis 6 mm zu sintern.

Vorteilhafterweise kann die Wanddicke bei Kronenkappen 0,3 bis maximal 0,8 mm und die Materialdicke bei Vollkronen 0,3 bis maximal 4 mm betragen und kann der Verbinderquerschnitt bei Brückenkonstruktionen maximal 20 mm² betragen.

Vorteilhafterweise kann die Temperatur in der Ofenkammer während des Schritts e) mindestens so groß sein, dass eine Sinterung mit einem Sintergrad von mindestens 80% bei dieser Temperatur und der vorgegebenen Zeitdauer möglich ist und kann die Temperatur in der Ofenkammer während des Schritts e) höchstens so groß sein, dass eine nachteilige Phasenumwandlung oberhalb der Temperatur vermieden wird.

Die Sinterung muss einen Grad der Sinterung aufweisen, bei dem die per Norm geforderten Materialeigenschaften und die optischen Eigenschaften im Bauteil erreicht werden. Der Sintergrad wird dabei über die relative Dichte beschrieben, wobei nicht zwingend eine relative Dichte >99,5 % nötig ist, um die notwendigen Eigenschaften zu erreichen.

Vorteilhafterweise kann die Temperatur in der Ofenkammer während des Schritts e) für ein dentales Zirkonoxid nach dem Grundtyp Zirkonoxid ZrO₂ mit einem zugesetzten Anteil von 4,5-6 Massen% Yttriumoxid Y₂O₃ mindestens 1.550°C und höchstens 1.600°C betragen. Damit wird für die Haltezeit eine nachteilige Phasenumwandlung vermieden.

Vorteilhafterweise kann die Ofenkammer während des Schritts d) eine Aufheizrate von mindestens im Mittel 1,0°C/s und höchstens 6°C/s als Maximalwert aufweisen.

Damit lässt sich ein Verzug des zu sinternden Bauteils während des Aufheizens in praktisch relevantem Maß beherrschen und die Heizleistung kann mit einem mit Haushaltsstrom von beispielsweise 230 V und einer Absicherung von maximal 16 Ampere bereitgestellt werden, wobei auch 15 Ampere ausreichen, wenn die lokale Stromversorgung mit Haushaltsstrom eine derartige Begrenzung erfordert.

Noch ein weiterer Gegenstand der Erfindung ist ein Computerprogramm, gespeichert auf einem maschinenlesbaren Träger mit einem maschinenlesbaren Code, für die Ausführung eines Verfahrens zur Temperatursteuerung während eines Sintervorgangs unter Verwendung eines Sinterofens, wobei die Auswahl des Temperaturprofils für den Sintervorgang des zu sinternden Bauteils in Abhängigkeit der Ladesequenz des Sinterofens für das zu sinternde Bauteil nach einem der Ansprüche 10-21 erfolgt.

### Kurzbeschreibung der Zeichnungen

Die Erfindung wird anhand der Zeichnung erläutert. Es zeigt:
- Fig. 1: einen Teil eines erfindungsgemäßen Sinterofens für Bauteile aus einem Sinterwerkstoff, insbesondere für Dentalbauteile;
- Fig. 2: den Teil nach Fig. 1 in einer Seitenansicht des gesamten Sinterofens;
- Fig. 3: ein Temperaturprofil für das erfindungsgemäße Verfahren zur Sinterung derartiger Bauteile;
- Fig. 4: unterschiedliche Temperaturprofile in Abhängigkeit des Temperaturabfalls und/oder der Zeitdauer der Ladesquenz;
- Fig. 5: eine Prinzipskizze der Steuerung.
- Fig. 6A-C: typische Dentalbauteile.

### Ausführungsbeispiel

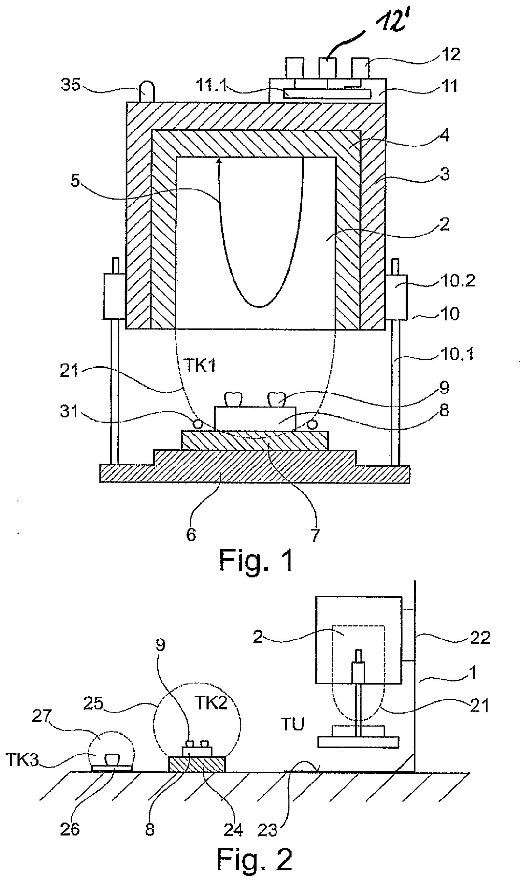

Die Fig. 1 zeigt einen Teil eines Sinterofens 1 (Fig. 2), der eine Ofenkammer 2 aufweist, deren Wände 3 mit einer Isolierung 4 zum Abschirmen der heißen Ofenkammer gegen die Umgebung versehen sind. Zum Aufheizen der Ofenkammer 2 ist in der Ofenkammer 2 eine Aufheizvorrichtung 5 mit Heizelementen angeordnet. Die Ofenkammer weist einen zu öffnenden Wandabschnitt 6 zum Einbringen des zu sinternden Bauteils in die Ofenkammer auf, der hier der untere Wandabschnitt ist, also der Boden der Ofenkammer 2. Der Boden 6 weist ebenfalls eine Isolierung 7 auf, auf die eine Unterlage 8 für die zu sinternden Bauteile 9 abgestellt ist, die auch als Träger 8 bezeichnet wird. Als Träger 8 kommen aber auch Bügel oder senkrecht stehende Stifte aus Keramik oder hochschmelzendem Metall in Betracht, auf die das Dentalbauteil aufgesetzt wird. Über ein Heizelement 31 kann eine separate Heizeinrichtung bereitgestellt sein.

Zum motorischen Öffnen und Schließen des Wandabschnitts 6 sind Antriebsmittel 10 vorgesehen, wodurch sich der Wandabschnitt 6 zum Öffnen der Ofenkammer 2 absenken und zum Schließen der Ofenkammer 2 anheben lässt.

Für die Aufheizvorrichtung 5 und für die Antriebsmittel 10 ist eine Steuerung 11 vorgesehen, welche auch Bedienelemente 12 für Antriebsmittel 10 bestehend aus einer Spindelstange 10.1 und einer angetriebenen Spindelmutter 10.2 und gegebenenfalls Bedienelemente 12'für die Eingabe weiterer Parameter zur Beeinflussung der Aufheizvorrichtung 5 umfasst. Es können auch getrennte Steuerungen und andere Hubvorrichtungen vorgesehen sein.

Die Steuerung 11 ist so ausgebildet, dass sie eine vorgegebene automatische Ladesequenz für die Antriebsmittel 10.1, 10.2 mit den Schritten Öffnen, Halten und Schließen des Wandabschnitts 6 sowie zur Festlegung einer Aufheizung 5 der Ofenkammer 2 aufweist und dass das Betätigen des Bedienelements 12 die Ladesequenz der Steuerung 11 auslöst und dass die Antriebsmittel 10 über die Steuerung automatisch entsprechend der Ladesequenz betätigt sind. Weiterhin ist ein Auswertemittel 11.1 für ein CAD-Datensatz enthalten.

Anstelle eines automatisierten Ablaufs der Ladesequenz kann diese auch rein manuell durchgeführt oder jeweils manuell ausgelöst werden, wobei dann die Abfolge der einzelnen Schritte der Ladesequenz durch ein Signalanzeiger 35 für den Benutzer wahrnehmbar gemacht werden, etwa optisch oder akustisch. Der Signalanzeiger 35 ist ebenfalls mit der Steuerung 11 verbunden.

Noch eine andere Ausgestaltung erfasst die einzelnen Schritte der Ladesequenz in ihrer Zeitdauer und/oder den Temperaturabfall der Ladesequenz, die dann weitgehend beliebig ablaufen kann, und passt das Temperaturprofil der Ofenkammer für den anschließenden Sintervorgang entsprechend an bzw. wählt dieses aus einer Vielzahl aus.

In dem nach dem Sintervorgang dargestellten geöffneten Zustand der Ofenkammer 2 ist der Träger 8, auf dem sich das gesinterte Bauteil 9 befindet, in einem Abstand zu der Ofenkammer 2 gehalten und befindet sich in einer ersten, von der Ofenkammer 2 aus beheizten Abkühlzone 21 mit der Temperatur TK1.

In Fig. 2 ist der gesamte Sinterofen 1 in einer Seitenansicht dargestellt, wobei der Teil aus Fig. 1 an einer Rückwand 22 befestigt ist, welche auf einem Fußteil 23 aufsitzt.

Der Sinterofen 1 steht in der Regel auf einem nicht dargestellten Arbeitstisch oder auf einer nicht dargestellten Arbeitsplatte und kann trotz seines Gewichts noch angehoben und verschoben werden, wenn es z.B. aus Reinigungsgründen erforderlich sein sollte.

In dem dargestellten geöffneten Zustand der Ofenkammer wurde der Träger, auf dem sich das gesinterte Bauteil befindet, aus der ersten beheizten Abkühlzone 21 mit der Temperatur TK1 entfernt. Am Sinterofen 1 oder in unmittelbarer Nähe davon ist eine zweite Abkühlstufe vorgesehen, die ohne Beheizung ist und eine feuerfeste Unterlage 24 mit Raumtemperatur zur Aufnahme des Trägers 8 mit dem darauf angeordneten Bauteil 9 aufweist. Dabei stellt der gegenüber der Umgebungstemperatur noch stets aufgeheizte Träger 8 eine Abkühlzone 25 mit einer Temperaturverteilung mit einer Temperatur Tk2 bereit, die größer als die Umgebungstemperatur TU ist.

Eine dritte Abkühlstufe umfasst eine Unterlage 26 mit einer hohen Wärmeabführleistung, etwa eine metallische Platte mit Raumtemperatur, sodass ein darauf angeordnetes Bauteil der Umgebungstemperatur ausgesetzt ist und eine dritte Abkühlzone mit einer Temperatur Tk3 vorliegt.

Mit zunehmender Ofentemperatur fällt die Heizrate degressiv ab. Die Heizrate unmittelbar nach der Ladesequenz beträgt 3,3 - 3,5 °C/s in der ersten Minute. Ab der zweiten Minute sind es 1,0 - 1,25 °C/s. Die Heizrate fällt dann zur letzten Minute auf 0,1 - 0,12 °C/s ab. Im Mittel liegt die Heizrate nach der Ladesequenz zwischen 1,16 und 1,25°C/s.

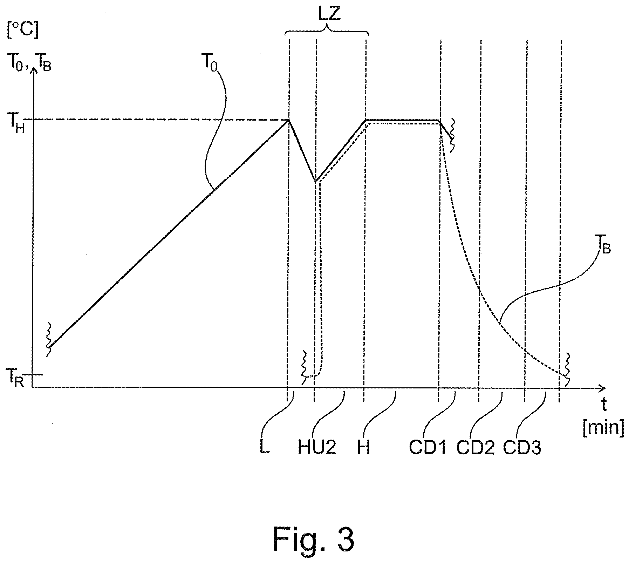

In Fig. 3 ist ein Temperaturprofil für das erfindungsgemäße Verfahren zur Sinterung derartiger Bauteile in einem Sinterofen dargestellt und zwar für die Ofentemperatur To und die Bauteiltemperatur T_{B}.

Die Verkürzung der effektiven Prozesszeit wird realisiert durch Eliminieren der Aufheizzeit, einer verkürzten Haltezeit und einer kontrollierten Abkühlung über drei Kühlzonen mit jeweils definierten Temperaturverteilungen. Das Vorheizen des Ofens kann mit vorgeschalteten Prozessen parallelisiert werden, so dass als Prozessbruttozeit nur die Zeit vom Beladen des Ofens bis zum Anfassen der Teile nach dem Abkühlen maßgebend ist. Diese Zeit kann je nach Belastbarkeit und Art des Materials weniger als 15 min betragen. Die verkürzte Prozessdurchlaufzeit erlaubt dem Zahnarzt in Verbindung mit einem dentalen CAD/CAM-System eine Behandlung, die als "chairside" bekannt ist. Das bedeutet, der lung, die als "chairside" bekannt ist. Das bedeutet, der Patient kann aufgrund der schnellen Herstellung einer Restauration in nur einer Sitzung mit festsitzendem Zahnersatz versorgt werden.

Auch der Zahntechniker kann hierdurch Restaurationen ohne signifikante Unterbrechung fertigen. Einzelne Aufträge können unmittelbar nach Auftragseingang am Stück gefertigt werden. Die kurze Durchlaufzeit erlaubt dem Zahntechniker kurze Reaktionszeit bei Eilaufträgen.

Bereits vor dem eigentlichen Sintern wird der Ofen auf eine Haltetemperatur T_{H} von beispielsweise 1600°C für Zirkonoxid vorgeheizt. Das zu sinternde Bauteil kann in einem parallel verlaufenden Herstellungsprozess hergestellt werden.

Zum Beladen wird die Ofenkammer 2 im geheizten Zustand geöffnet, wobei die Bauteilunterlage 8 und die Bauteile 9 beim Beladen noch Raumtemperatur Tu aufweisen.

Da kein Werkstoff beliebig thermoschockbeständig ist, folgt der schnellen Erwärmung und der kurzen Haltezeit ein kontrollierter und definierter Abkühlprozess, der zeitoptimal unter Erhaltung der notwendigen Werkstoffeigenschaften eingestellt wird.

Das auf das Vorheizen der Ofenkammer 2 bis mindestens auf die für das Sintern gewünschte Haltetemperatur T_{H} folgende Verfahren wird durch die Betätigung des Bedienelements 12 gestartet, welches die in der Steuerung 11 enthaltenen Ladesequenz auslöst. Dabei spielt es keine Rolle, wie lange die Ofenkammer 2 auf der Haltetemperatur T_{H} gehalten wurde, bevor das Betätigungselement 12 betätigt wurde.

Folgende Schritte laufen dann als eine Ladesequenz von Öffnen, Halten und Schließen in einer Zeitdauer L von maximal 2 Minuten, vorzugsweise 1 Minute automatisch ab:
a) Öffnen eines Wandabschnitts 6 der Ofenkammer 2 mit vorgeheizter Ofenkammer 2 bei eingeschalteter Ofenheizung;
b) Beladen der Ofenkammer, insbesondere durch Anbringen des auf einem Träger 8 angeordneten zu sinternden Bauteils 9 außerhalb der Ofenkammer 2 auf dem geöffneten Wandabschnitt 6;
c) Schließen der Ofenkammer 2.

Bereits bei dem Einbringen des auf dem Träger 8 angeordneten zu sinternden Bauteils 9 in die Ofenkammer erfolgt durch die Anbringung auf dem Wandabschnitt 6 und durch die bekannte Ladesequenz ein Aufheizen des Bauteils 9 mit einem bekannten Temperaturprofil, da die Ladesequenz bekannt ist.

Es ist auch möglich, die Ofenkammer 2 auf eine höhere Haltetemperatur T_{H}' vorzuheizen, um den Temperaturabfall in der Ofenkammer 2 während der Zeitdauer, die für das Beladen der Ofenkammer und die damit verbundene erforderliche Öffnung der Ofenkammer erforderlich ist, möglichst knapp unter der für das Sintern gewünschte Haltetemperatur T_{H} zu halten und die Aufheizzeit nach dem Öffnen zu verringern.

Nach dem Ladezyklus, der wegen der bekannten Zeitverläufe eine definierte Abkühlung der Ofenkammer 2 zur Folge hat, erfolgt ein Aufheizen der Ofenkammer 2 bis zu einer für das Sintern gewünschten Haltetemperatur T_{H} während einer Zeitdauer HU2 von maximal 8 Minuten, vorzugsweise 4-5 Minuten, wobei sich auch das Bauteil 9 in dieser Zeit entsprechend mit erwärmt.

Zur Durchführung des Sinterns mit konstanter Haltetemperatur T_{H} wird die Haltetemperatur T_{H} während einer Zeitdauer H von maximal 15 Minuten, vorzugsweise 4-8 Minuten aufrechterhalten.

Nach diesem Sintern mit konstanter Haltetemperatur T_{H} erfolgt ein Öffnen der Ofenkammer 2, entweder bei ausgeschalteter Ofenheizung 5 oder bei eingeschalteter Ofenheizung 5 und das Bauteil 9 mit dem Träger 8 wird für eine erste Abkühlstufe in eine beheizte erste Abkühlzone 21 verbracht und verbleibt für eine Abkühlzeitdauer CD1 von mindestens 0,5 min., höchstens jedoch 5 min.

Als zweite Abkühlstufe wird das Bauteil mit dem Träger aus der ersten Abkühlzone 21 in eine zweite Abkühlzone 25 verbracht und verbleibt für eine Abkühlzeitdauer CD2 von 1-5 min. Dabei strahlt der Träger 8 selbst Wärme ab.

Schließlich erfolgt das Entfernen des Bauteils 9 vom Träger 8 und Verbringen des Bauteils in eine dritte Abkühlzone 27 für die dritte Abkühlstufe durch Ablegen auf einer Unterlage 26 mit im wesentlichen Raumtemperatur Tu sowie Verweilen für eine Abkühlzeitdauer CD3 von mindestens 0,5 Minuten, höchstens jedoch 10 min. Hier kommt die Wärme nur noch vom Bauteil 9 selbst.

Die Temperatur TK1, TK2, TK3 in den drei aufeinanderfolgenden Abkühlzonen nehmen stets ab, die erste Abkühlzone ist heißer als die zweite und diese ist wiederum heißer als die dritte. Falls erforderlich, können auch die zweite und die dritte Abkühlzone beheizt sein.

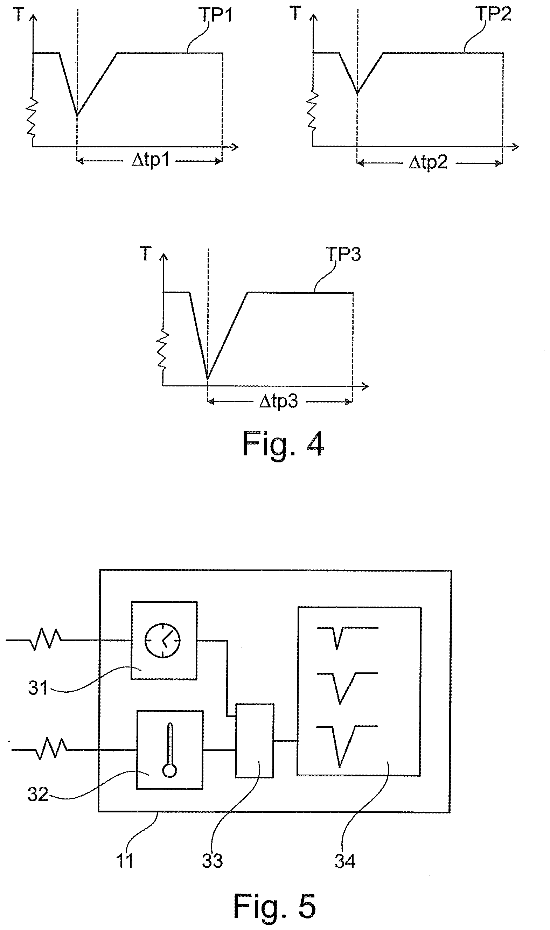

In Fig. 4 sind unterschiedliche Temperaturprofile Tp1, TP2 und TP3 in Abhängigkeit des Temperaturabfalls und/oder der Zeitdauer der Ladesquenz dargestellt, wobei sich auch unterschiedliche Zeitdauern delta-tpl, delta-tp2 und delta-tp3 ergeben. Je kürzer die Ladesequenz und je geringer der Temperaturabfall dabei, desto kürzer ist auch die sich an die Ladesequenz anschließende Aufheiz- und Haltephase.

In Fig. 5 ist eine Prinzipskizze eines Teils der Steuerung 11 gezeigt, in der Mittel 31 für die Erfassung der Zeitdauer der Ladsequenz und Mittel 32 für die Erfassung der Temperatur mit einem Auswahl- oder Vergleichsmittel 33 zusammenwirken, um aus einer in einem Speicherbereich 34 abgelegten Vielzahl vom Temperaturprofilen für die Ofenkammer das passende auszuwählen und die Ofenkammer dann gemäß dem gewählten Temperaturprofil zu betreiben.

Für Zirkonoxid und transluzentem Zirkonoxid werden folgende, in Fig. 4A-C dargestellte Dimensionen der Gestaltungsmerkmale für eine Verkürzung der Prozesszeit angenommen:
- bei Kronenkappen gemäß Fig. 4A liegt die Wanddicke, dargestellt durch die beiden Pfeile, im Bereich von 0,3 bis maximal 0,8 mm;
- bei Vollkronen gemäß Fig. 4B liegt die Materialdicke, dargestellt durch die beiden Pfeile, im Bereich von 0,3 bis maximal 4 mm;
- bei Brückenkonstruktionen gemäß Fig. 4C beträgt der Verbinderquerschnitt, dargestellt durch die beiden rechten Pfeile, maximal 20 mm², was etwa einer Dicke von 5 mm entspricht, wobei der durch die beiden linken Pfeile dargestellte Querschnitt eines Zwischenglieds auch größer sein kann, da der beim Sintervorgang erreichte Sintergrad dort nach wie vor noch ausreicht, um die geforderte Festigkeit sicherzustellen.

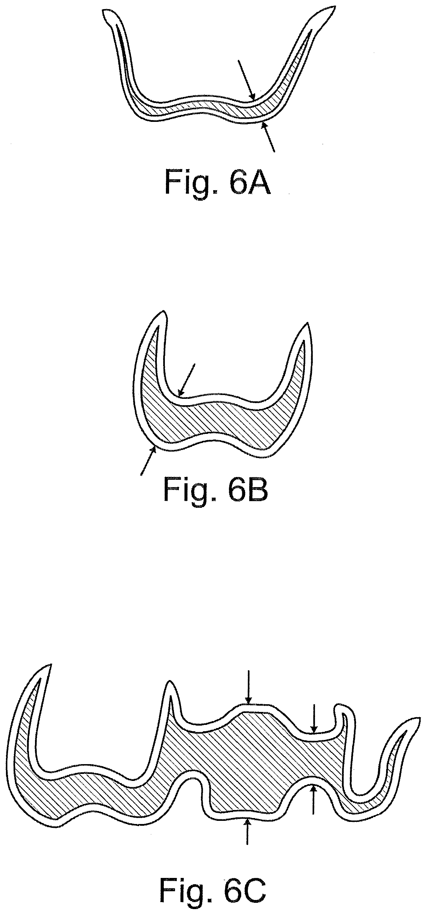

Aufgrund dieser in Fig. 6A-C dargestellten geometrischen Abmessungen werden dentale Restaurationen bei vergleichbarem Material und Energieeinsatz schneller aufgeheizt. In Abhängigkeit der Gestaltungsmerkmale Wandstärke und Bauteilquerschnitt können die Parameter der Wärmebehandlung , also etwa Aufheiz- und Abkühlraten, Haltezeiten, durch Softwareunterstützung vorbestimmt werden.

Für Zirkonoxid wurden mehrere Temperaturstufen mit definierten Temperaturfeldern experimentell ermittelt:
Nach Ablauf der Haltezeit wird die Ofenkammer geöffnet, der Träger 8 wird zusammen mit dem Bauteil 9 aus der Ofenkammer 2 bewegt, bleibt aber auf dem Wandabschnitt 6 der Ofenkammer 2. Das Temperaturstrahlungsfeld der Ofenkammer 2 und das Temperaturstrahlungsfeld der Wandabschnitts 6, des Trägers 8 und des Bauteils 9 überlagern sich und wirken sich puffernd auf den Temperaturausgleich mit der signifikant mit einer Temperatur Tᵤ kälteren Raumluft aus. Bei Erreichen einer Temperatur von < 600°C und >275°C des Trägers erfolgt der Übergang zur Abkühlstufe 2.

Um dem Benutzer den Übergang zur Abkühlstufe 2 mitzuteilen, kann die Steuerung des Ofens ein akustisches Signal ausgeben, das dann ausgelöst wird, wenn an einer Temperaturmessstelle in der Ofenkammer 1000°C gemessen wird. Es hat sich herausgestellt, das dies ausreichend ist, da dieser Temperatur in der Ofenkammer dann eine Oberflächentemperatur des geöffneten Wandabschnitts 6 bzw. des Trägers 8 im angegebenen Bereich entspricht. Das Hinweissignal kann auch optisch, etwa durch eine gegebenenfalls blinkende Kontrollleuchte oder durch einen Hinweis im Display, der ebenfalls blinken kann, gegeben werden.

Der Träger 8 wird zusammen mit dem Bauteil 9 aus der ersten Abkühlzone 21 und damit aus dem Temperaturstrahlungsfeld der Ofenkammer 2 entfernt und auf eine feuerfeste Unterlage mit Raumtemperatur gestellt. Jetzt erfolgt der Temperaturaustausch zwischen Raumtemperatur Tᵤ und Träger 8 zusammen mit dem Bauteil 9 und bildet die zweite Abkühlzone 25 aus. Der Träger 8 übernimmt jetzt die Funktion des Temperaturpuffers, um den möglichen Thermoschock zu kompensieren.

Nach 2 min. liegt die Temperatur des Trägers 8 je nach Beladung zwischen 100°C und 200°C. Das Bauteil 9 kann nun in die dritte Abkühlstufe überführt werden.

Beim Übergang von Abkühlstufe 2 zu Abkühlstufe 3 wird das Bauteil 9 von dem Träger 8 auf eine metallische Unterlage 26 mit Raumtemperatur Tᵤ abgelegt, bis sie nach maximal 2 min. handwarm sind und weiterverarbeitet werden können.

Die Einhaltung der festgestellten Temperaturbereiche beim Abkühlen kann durch aktiv oder passiv beheizte Unterlagen unterstützt werden.

Grundsätzlich ist der Prozess für Kronen, Kronenkäppchen, Vollkronen, Brücken, Brückengerüste, Inlays und Veneers geeignet. Die zuvor genannten Parameter wurden für das Sintern von Zirkonoxid und transluzentem Zirkonoxid ermittelt.

Bei Adaption von Haltetemperatur, Haltezeit und der Abkühlstufen ist der beschriebene Prozess ebenso für andere sinterfähige Oxidkeramiken oder Glaskeramiken verwendbar. Das gilt ebenso auch für sinterfähige, pulvermetallurgisch hergestellte NEM-Materialien auf CoCr-, CoCrMo-, CoCrW-oder CoCrMoW-Basis.

Mit dem Computerprogramm erfolgt eine Auswahl eines Temperaturprofils für den Sintervorgang in Abhängigkeit der Ladesequenz des Sinterofens.

## Patentansprüche

1. Sinterofen (1) für Bauteile (9) aus einem Sinterwerkstoff, insbesondere für Dentalbauteile und insbesondere für Bauteile aus Keramik, umfassend eine beheizbare Ofenkammer (2) für das zu sinternde Bauteil (9), wobei die Ofenkammer (2) einen zu öffnenden Wandabschnitt (6) zum Einbringen des zu sinternden Bauteils (9) in die Ofenkammer (2) aufweist, wobei eine Steuerung (11) vorgesehen ist, über welche die Aufheizung der Ofenkammer (2) mittels einer Aufheizvorrichtung (5) für die Ofenkammer (2) gesteuert ist, **dadurch gekennzeichnet, dass** die Steuerung (11) Mittel (31, 32) aufweist, mit denen die Zeitdauer einer Ladesequenz mit den Schritten Öffnen, Halten und Schließen des Wandabschnitts (6) jeweils bei aufgeheizter Ofenkammer (2) einzeln oder insgesamt und/oder der Temperaturabfall in der Ofenkammer (2) während der Schritte wiederum einzeln oder insgesamt erfassbar ist und dass in der Steuerung (11) mehrere sich an die Ladesequenz anschließende vorgegebene Temperaturprofile für einen anschließenden Sintervorgang für die Ofenkammer (2) abgespeichert sind, von denen ein passendes Temperaturprofil über in der Steuerung vorgesehene Auswahl-oder Vergleichsmittel (33) in Abhängigkeit der Zeitdauer der Schritte einzeln oder insgesamt und/oder des Temperaturabfalls in der Ofenkammer (2) während der Schritte wiederum einzeln oder insgesamt aus einem Speicherbereich (34) automatisch auswählbar ist.

2. Sinterofen nach Anspruch 1, **dadurch gekennzeichnet, dass** ein mit der Steuerung (11) zusammenwirkendes Bedienelement (12') vorgesehen ist und dass das Betätigen des Bedienelements (12) die Erfassung mittels der Steuerung (11) auslöst.

3. Sinterofen nach Anspruch 1 oder 2, **dadurch gekennzeichnet, dass** Antriebsmittel (10) zum motorischen Öffnen und Schließen des Wandabschnitts (6) vorgesehen sind und dass die Antriebsmittel (10) mittels eines Bedienelements (12) über die Steuerung (11) entsprechend einer vorgegebenen Ladesequenz betätigt sind.

4. Sinterofen (1) für Bauteile (9) aus einem Sinterwerkstoff, insbesondere für Dentalbauteile und insbesondere für Bauteile aus Keramik, umfassend eine beheizbare Ofenkammer (2) für das zu sinternde Bauteil (9), wobei die Ofenkammer (2) einen zu öffnenden Wandabschnitt (6) zum Einbringen des zu sinternden Bauteils (9) in die Ofenkammer (2) aufweist, wobei eine Aufheizvorrichtung (5)für die Ofenkammer (2) vorgesehen ist und eine Steuerung (11) die Aufheizung der Ofenkammer (2) bewirkt, **dadurch gekennzeichnet, dass** die Steuerung (11) eine vorgegebene Ladesequenz mit den Schritten Öffnen, Halten und Schließen des Wandabschnitts (6) jeweils bei aufgeheizter Ofenkammer aufweist und dass entweder die Schritte automatisiert durchgeführt oder die Abfolge der Schritte über mindestens einen Signalanzeiger (35) wahrnehmbar gemacht ist und dass die Steuerung (11) ein sich an die Ladesequenz anschließendes vorgegebenes Temperaturprofil für einen anschließenden Sintervorgang für die Ofenkammer (2) aufweist.

5. Sinterofen nach Anspruch 4, **dadurch gekennzeichnet, dass** Antriebsmittel (10) zum motorischen Öffnen und Schließen des Wandabschnitts (6) vorgesehen sind und wobei eine Steuerung (11) für die Antriebsmittel (10) vorgesehen ist, welche ein Bedienelement (12) für die Antriebsmittel (10) aufweist und dass durch das Betätigen des Bedienelements(12) die Antriebsmittel (10) über die Steuerung (11) automatisch entsprechend der vorgegebenen Ladesequenz betätigt sind.

6. Sinterofen nach Anspruch 4 oder 5, **dadurch gekennzeichnet, dass** der zu öffnende Wandabschnitt (6) als Ablage für das Bauteil (9) ausgebildet ist und eine beheizte Abkühlzone (21) bildet, die in einem Abstand zu der Ofenkammer (2) angeordnet ist, wobei das auf der Ablage angeordnete Bauteil (9) bei geöffnetem Wandabschnitt (6) mittels der aufgeheizten Ofenkammer (2) beheizt ist oder über eine separate Heizeinrichtung (31) verfügt, dass die Steuerung eine Abkühlsequenz zum Öffnen des Wandabschnitts (6) nach dem Sintervorgang und zum Halten des Wandabschnitts (6) in der Abkühlzone (21) sowie zur Festlegung der Aufheizung der Ofenkammer (2) oder der separaten Heizeinrichtung (31) aufweist und dass ein mittels der Steuerung (11) aktivierbares Kontrollsignal vorhanden ist, das das Erreichen einer Abkühltemperatur in der Abkühlzone (21) oder in der Ofenkammer (2) anzeigt.

7. Sinterofen nach einem der Ansprüche 1 bis 6, **dadurch gekennzeichnet, dass** die Aufheizvorrichtung (5) nach der Ladesequenz eine Aufheizrate der Ofenkammer (2) von mindestens im Mittel 1,0°C/s und höchstens 6°C/s als Maximalwert aufweist.

8. Sinterofen nach einem der Ansprüche 1 bis 7, **dadurch gekennzeichnet, dass** die Steuerung (11) ein Eingabemittel (12) aufweist, um ein Temperaturprofil abhängig von einer Baugröße des Bauteils (9) oder geometrischen Merkmalen wie eine maximale Wandstärke oder ein maximaler Bauteilquerschnitt oder ein Volumen des zu sinternden Bauteils (9), eine Materialart des zu sinternden Bauteils (9) oder eine Kombination mehrerer davon auszuwählen.

9. Sinterofen nach einem der Ansprüche 1 bis 7, **dadurch gekennzeichnet, dass** die Steuerung (11) ein Auswertemittel (11.1) für einen Strichkode und/oder eine sonstige maschinenlesbare Kennung mit Informationen über das zu sinternde Bauteil (9) aufweist, um ein Temperaturprofil unter Berücksichtigung einer maximalen Wandstärke des zu sinternden Bauteils (9), eines Volumens des zu sinternden Bauteils (9), einer Materialart oder eines Typs des zu sinternden Bauteils (9) oder eine Kombination mehrerer davon automatisch festzulegen.

10. Verfahren zur Sinterung von Bauteilen (9) aus einem Sinterwerkstoff, insbesondere von Dentalbauteilen in einem Sinterofen (1), umfassend die folgenden Schritte:
a) Öffnen eines Wandabschnitts (6) einer Ofenkammer (2) mit vorgeheizter Ofenkammer (2) bei eingeschalteter Ofenheizung (5);
b) Beladen der Ofenkammer (2), insbesondere durch Anbringen des auf einem Träger (8) angeordneten zu sinternden Bauteils (1) außerhalb der Ofenkammer (2) auf dem geöffneten Wandabschnitt (6);
c) Schließen der Ofenkammer (2);
d) Aufheizen der Ofenkammer (2) bis zu einer Haltetemperatur T_{H} während einer Zeitdauer HU2;
e) Aufrechterhalten der Haltetemperatur während einer Zeitdauer H;
f) Öffnen der Ofenkammer (2), entweder bei ausgeschalteter Ofenheizung oder bei eingeschalteter Ofenheizung;
g) für eine erste Abkühlstufe Verbringen des Bauteils (9) mit dem Träger (8) in eine beheizte erste Abkühlzone (21) und Verbleib für eine Abkühlzeitdauer CD1;
h) Entfernen des Bauteils (9) vom Träger (8) und Verbringen des Bauteils (9) in eine weitere Abkühlzone (27) für die weiter Abkühlstufe durch Ablegen auf eine Unterlage (26) mit im wesentlichen Raumtemperatur sowie Verweilen für eine Abkühlzeitdauer CD3,
j) wobei
- die Schritte a)-c) für eine Zeitdauer L von mindestens 2 s und maximal 2 Minuten, vorzugsweise 1 Minute;
- der Schritt d) für die Zeitdauer HU2 von maximal 8 Minuten, vorzugsweise 4-5 Minuten
- der Schritt e) für die Zeitdauer H von maximal 15 Minuten, vorzugsweise 4-8 Minuten;
- der Schritt f) und g) für die Abkühlzeitdauer CD1 von mindestens 0,5 Minuten, höchstens jedoch 5 Minuten;
- der Schritt h) für eine Abkühlzeitdauer CD3 von mindestens 0,5 Minuten, höchstens jedoch 10 Minuten
durchgeführt wird.

11. Verfahren nach Anspruch 10, **dadurch gekennzeichnet, dass** zwischen der ersten und der weiteren Abkühlstufe für eine zweite Abkühlstufe das Bauteil (9) mit dem Träger (8) aus der ersten Abkühlzone (25) in eine zweite Abkühlzone verbracht wird und für eine Abkühlzeitdauer CD2 von 1-5 Minuten verbleibt.

12. Verfahren nach einem der Ansprüche 10 oder 11, **dadurch gekennzeichnet, dass** über ein Auswertemittel (11.1) für einen Strichkode und/oder eine sonstige maschinenlesbare Kennung mit Informationen über eine Baugröße des Bauteils (9) oder geometrische Merkmale wie eine maximale Wandstärke oder ein maximaler Bauteilquerschnitt oder ein Volumen des zu sinternden Bauteils (9), eine Materialart des zu sinternden Bauteils (9) oder eine Kombination mehrerer davon des zu sinternden Bauteils (9) Informationen automatisch ausgewertet werden und dass ein Temperaturprofil automatisch bestimmt wird.

13. Verfahren nach Anspruch 12, **dadurch gekennzeichnet, dass** die jeweiligen Zeitdauern aus den Schritten a) bis i) über das Auswertemittel (11.1) aus Informationen über das zu sinternde Bauteil automatisch bestimmt werden, insbesondere die Zeitdauer H aus Schritt e), wobei eine maximale Wandstärke des zu sinternden Bauteils, ein Volumen des zu sinternden Bauteils, eine Materialart oder der Typ des zu sinternden Bauteils oder eine Kombination mehrerer davon automatisch ausgewertet werden.

14. Verfahren nach einem der Ansprüche 10 bis 13, **dadurch gekennzeichnet, dass** die beheizte Abkühlzone (21) der ersten Abkühlstufe durch den Sinterofen (1), insbesondere durch die Ofenkammer (2) beheizt wird.

15. Verfahren nach einem der Ansprüche 10 bis 14, **dadurch gekennzeichnet, dass** das auf einem Träger (8) angeordnete zu sinternden Bauteil (9)außerhalb der Ofenkammer (2) auf dem geöffneten Wandabschnitt (6) angeordnet wird.

16. Verfahren nach einem der Ansprüche 10 bis 15, **dadurch gekennzeichnet, dass** Bauteile (9) aus sinterfähiger Oxidkeramiken oder Glaskeramiken sowie sinterfähige, pulvermetallurgisch hergestellte NEM-Materialien insbesondere auf der Basis von CoCr, CoCrMo, CoCrW oder CoCrMoW verwendet werden.

17. Verfahren nach einem der Ansprüche 10 bis 16, **dadurch gekennzeichnet, dass** zahntechnische Bauteile (9) aus Zirkonoxid und transluzentem Zirkonoxid mit Wanddicken von 0,1 bis 6 mm gesintert werden.

18. Verfahren nach einem der Ansprüche 10 bis 17, **dadurch gekennzeichnet, dass** die Wanddicke bei Kronenkappen 0,3 bis maximal 0,8 mm, dass der Materialdicke bei Vollkronen 0,3 bis maximal 4 mm beträgt und dass der Verbinderquerschnitt bei Brückenkonstruktionen maximal 20 mm² beträgt.

19. Verfahren nach einem der Ansprüche 10 bis 18, **dadurch gekennzeichnet, dass** die Temperatur To in der Ofenkammer (2) während des Schritts e) mindestens so groß ist, dass eine Sinterung mit einem Sintergrad von mindestens 80% möglich ist und dass die Temperatur To in der Ofenkammer (2) während des Schritts e) höchstens so groß ist, dass eine nachteilige Phasenumwandlung oberhalb der Temperatur Tmax vermieden wird.

20. Verfahren nach einem der Ansprüche 10 bis 19, **dadurch gekennzeichnet, dass** die Temperatur To in der Ofenkammer (2) während des Schritts e) für ein dentales Zirkonoxid nach dem Grundtyp Zirkonoxid ZrO₂ mit einem zugesetzten Anteil von 4,5-6 Massen% Yttriumoxid Y₂O₃ mindestens 1.550°C und höchstens 1.600°C beträgt.

21. Verfahren nach einem der Ansprüche 10 bis 20, **dadurch gekennzeichnet, dass** die Ofenkammer (2) während des Schritts d) eine Aufheizrate von mindestens im Mittel 1,0°C/s und höchstens 6°C/s als Maximalwert aufweist.

22. Computerprogramm, gespeichert auf einem maschinenlesbaren Träger mit einem maschinenlesbaren Code für die Ausführung eines Verfahrens zur Temperatursteuerung während eines Sintervorgangs unter Verwendung eines Sinterofens, wobei die Auswahl des Temperaturprofils für den Sintervorgang des zu sinternden Bauteils in Abhängigkeit der Ladesequenz des Sinterofens für das zu sinternde Bauteil nach einem der Ansprüche 10 bis 21 erfolgt.

## Claims

1. A sintering furnace (1) for components (9) made of a sintered material, in particular for dental components, and in particular for components made of ceramic, comprising a heatable furnace chamber (2) for the component (9) to be sintered, the furnace chamber (2) having an openable wall section (6) for introducing the component (9) to be sintered into the furnace chamber (2), wherein a controller (11) is provided, by means of which the heating of the furnace chamber (2) by means of a heating device (5) for the furnace chamber (2) is controlled, **characterised in that** the controller (11) has means (31, 32) with which to detect the duration of a loading sequence with the steps of opening, holding and closing the wall section (6), each with the furnace chamber (2) heated, individually or as a whole, and/or to detect the temperature drop in the furnace chamber (2) during the steps, again individually or as a whole, and **in that**, in the controller (11), a plurality of predetermined temperature profiles, subsequent to the loading sequence, are stored for a subsequent sintering process for the furnace chamber (2), of which a suitable temperature profile is selectable automatically from a memory area (34) by means of selection or comparison means (33) provided in the controller, depending on the duration of the steps, individually or as a whole, and/or the temperature drop in the furnace chamber (2) during the steps, again individually or as a whole.

2. The sintering furnace according to claim 1, **characterised in that** an operating element (12') which interacts with the controller (11) is provided and **in that** the actuation of the operating element (12) triggers the detection by means of the controller (11).

3. The sintering furnace according to claim 1 or 2, **characterised in that** drive means (10) are provided for the motorised opening and closing of the wall section (6) and **in that** the drive means (10) are actuated by means of an operating element (12) via the controller (11) according to a predetermined loading sequence.

4. The sintering furnace (1) for components (9) made of a sintered material, in particular for dental components, and in particular for components made of ceramic, comprising a heatable furnace chamber (2) for the component (9) to be sintered, the furnace chamber (2) having an openable wall section (6) for introducing the component (9) to be sintered into the furnace chamber (2), wherein a heating device (5) is provided for the furnace chamber (2) and a controller (11) causes heating of the furnace chamber (2), **characterised in that** the controller (11) has a predetermined loading sequence with the steps of opening, holding, and closing the wall section (6), each with the furnace chamber heated, and that either the steps are carried out automatically or the sequence of the steps is made perceptible by at least one signal indicator (35), and **in that** the controller (11) has a predetermined temperature profile subsequent to the loading sequence for a subsequent sintering process for the furnace chamber (2).

5. The sintering furnace according to claim 4, **characterised in that** drive means (10) are provided for the motorised opening and closing of the wall section (6) and wherein a controller (11) for the drive means (10) is provided, having an operating element (12) for the drive means (10), and **in that**, by actuating the control element (12), the drive means (10) are automatically actuated via the controller (11) in accordance with the predetermined loading sequence.

6. The sintering furnace according to claim 4 or 5, **characterised in that** the openable wall section (6) is formed as a shelf for the component (9) and forms a heated cooling zone (21), arranged at a distance from the furnace chamber (2), wherein the component (9) arranged on the shelf is heated by the heated furnace chamber (2) when the wall section (6) is open or has a separate heating device (31) such that the controller has a cooling sequence for opening the wall section (6) after the sintering process and for holding the wall section (6) in the cooling zone (21) and for fixing the heating of the furnace chamber (2) or the separate heating device (31), and **in that** there is a control signal, activatable by means of the controller (11), which indicates the reaching of a cooling temperature in the cooling zone (21) or in the furnace chamber (2).

7. The sintering furnace according to any one of claims 1 to 6, **characterised in that**, after the loading sequence, the heating device (5) has a heating rate of the furnace chamber (2) of at least 1.0°C/s on average and at most 6°C/s as a maximum value.

8. The sintering furnace according to any one of claims 1 to 7, **characterised in that** the controller (11) has an input means (12) to select a temperature profile, depending on a structural size of the component (9) or geometric features, such as a maximum wall thickness or a maximum component cross-section or a volume of the component (9) to be sintered, a type of material of the component (9) to be sintered, or a combination of several thereof.

9. The sintering furnace according to any one of claims 1 to 7, **characterised in that** the controller (11) has an evaluation means (11.1) for a bar code and/or another machine-readable identifier with information about the component (9) to be sintered, in order to automatically determine a temperature profile, taking into account a maximum wall thickness of the component (9) to be sintered, a volume of the component (9) to be sintered, a type of material or a type of the component (9) to be sintered, or a combination of several thereof.

10. A method for sintering components (9) made of a sintered material, in particular dental components, in a sintering furnace (1), comprising the following steps:
a) opening a wall section (6) of a furnace chamber (2), with the furnace chamber (2) preheated, with the furnace heater (5) switched on;
b) loading the furnace chamber (2), in particular by attaching the component (1) to be sintered, arranged on a carrier (8), outside the furnace chamber (2) on the open wall section (6);
c) closing the furnace chamber (2);
d) heating the furnace chamber (2) to a holding temperature T_{H} during a period HU2;
e) maintaining the holding temperature for a period H;
f) opening the furnace chamber (2), either with the furnace heater switched off or with the furnace heater switched on;
g) for a first cooling stage, moving the component (9) with the carrier (8) into a heated first cooling zone (21) and remaining for a cooling period CD1;
h) removing the component (9) from the carrier (8) and moving the component (9) into a further cooling zone (27) for the further cooling stage by placing it on a support (26) with essentially room temperature and remaining for a cooling period CD3,
j) wherein
- the steps a)-c) are performed for a period L of at least 2 s and at most 2 minutes, preferably 1 minute;
- the step d) is performed for the period HU2 of at most 8 minutes, preferably 4-5 minutes
- the step e) is performed for at most 15 minutes, preferably 4-8 minutes;
- the steps f) and g) are performed for the cooling period CD1 of at least 0.5 minutes, but not more than 5 minutes;
- the step h) is performed for a cooling period CD3 of at least 0.5 minutes, but not more than 10 minutes.

11. The method according to claim 10, **characterised in that**, between the first and the further cooling stages, for a second cooling stage, the component (9) with the carrier (8) is moved from the first cooling zone (25) into a second cooling zone and remains for a cooling period CD2 of 1-5 minutes.

12. The method according to one of claims 10 or 11, **characterised in that** information is automatically evaluated by means of an evaluation means (11.1) for a bar code and/or another machine-readable identifier with information about a structural size of the component (9) or geometric features, such as a maximum wall thickness or a maximum component cross-section or a volume of the component (9) to be sintered, a type of material of the component (9) to be sintered, or a combination of several thereof of the component (9) to be sintered, and **in that** a temperature profile is automatically determined.

13. The method according to claim 12, **characterised in that** the respective periods from steps a) to i) are automatically determined, by means of the evaluation means (11.1), from information about the component to be sintered, in particular the period H from step e), wherein a maximum wall thickness of the component to be sintered, a volume of the component to be sintered, a type of material or the type of the component to be sintered, or a combination of several thereof are automatically evaluated.

14. The method according to any one of claims 10 to 13, **characterised in that** the heated cooling zone (21) of the first cooling stage is heated by the sintering furnace (1), in particular by the furnace chamber (2).

15. The method according to any one of claims 10 to 14, **characterised in that** the component (9) to be sintered, arranged on a carrier (8), is arranged outside the furnace chamber (2) on the open wall section (6).

16. The method according to any one of claims 10 to 15, **characterised in that** components (9) made of sinterable oxide ceramics or glass ceramics, as well as sinterable NEM materials, produced by powder metallurgy, in particular based on CoCr, CoCrMo, CoCrW, or CoCrMoW, are used.

17. The method according to any one of claims 10 to 16, **characterised in that** dental components (9) made of zirconium oxide and translucent zirconium oxide with wall thicknesses of 0.1 to 6 mm are sintered.

18. The method according to any one of claims 10 to 17, **characterised in that** the wall thickness for crown caps is 0.3 to a maximum of 0.8 mm, that the material thickness for full crowns is 0.3 to a maximum of 4 mm, and that the connector cross-section for bridge constructions is a maximum of 20 mm².

19. The method according to any one of claims 10 to 18, **characterised in that** the temperature To in the furnace chamber (2) during step e) is at least high enough that sintering with a sintering degree of at least 80% is possible and **in that** the temperature To in the furnace chamber (2) during step e) is so high at most that an unfavourable phase change above the temperature Tmax is avoided.

20. The method according to any one of claims 10 to 19, **characterised in that** the temperature To in the furnace chamber (2) during step e) for a dental zirconium oxide of the basic type zirconium oxide ZrO₂ with an added proportion of 4.5-6% by mass of yttrium oxide Y₂O₃ is at least 1550°C and at most 1600°C.

21. The method according to any one of claims 10 to 20, **characterised in that** the furnace chamber (2) has an average heating rate of at least 1.0°C/s and at most 6°C/s as a maximum value during step d).

22. A computer program, stored on a machine-readable medium with a machine-readable code for performing a method for temperature control during a sintering process using a sintering furnace, wherein the selection of the temperature profile for the sintering process of the component to be sintered is done depending on the loading sequence of the sintering furnace for the component to be sintered according to any one of claims 10 to 21.

## Revendications

1. Four de frittage (1) pour éléments (9) en matériau fritté, en particulier pour éléments dentaires et en particulier pour éléments en céramique, comprenant une chambre de four pouvant être chauffée (2) pour l'élément (9) à fritter, la chambre de four (2) ayant une section de paroi (6) à ouvrir pour introduire l'élément à fritter (9) dans la chambre de four (2), une commande(11) étant prévue, par laquelle le chauffage de la chambre de four (2) est commandé au moyen d'un dispositif de chauffage (5) pour la chambre de four (2) **caractérisé en ce que** la commande (11) possède des moyens (31, 32) grâce auxquels la durée d'une séquence de charge comprenant les étapes d'ouverture, de maintien et de fermeture de la section de paroi (6) peut être détectée chacune avec une chambre de four chauffée (2) individuellement ou dans leur ensemble et/ou la baisse de température dans la chambre de four (2) pendant les étapes peut à nouveau être détectée individuellement ou dans leur ensemble et **en ce que** dans la commande (11) une pluralité de profils de température prédéterminés suivant la séquence de charge pour un processus de frittage ultérieur de la chambre du four (2) est stockée, dont un profil de température approprié peut être sélectionné automatiquement à partir d'une zone mémoire (34) via des moyens de sélection ou de comparaison (33) prévus dans la commande, en fonction de la durée des étapes individuellement ou dans leur ensemble et/ou de la baisse de température dans la chambre de four (2) pendant les étapes à nouveau individuellement ou dans leur ensemble.

2. Four de frittage selon la revendication 1, **caractérisé en ce qu'**un élément de commande (12') qui interagit avec la commande (11) est prévu et **en ce que** l'actionnement de l'élément de commande (12) déclenche la détection au moyen de la commande (11).

3. Four de frittage selon la revendication 1 ou 2, **caractérisé en ce que** des moyens d'entraînement (10) sont prévus pour l'ouverture et la fermeture motorisées de la section de paroi (6) et **en ce que** les moyens d'entraînement (10) sont actionnés au moyen d'un élément de commande (12) via la commande (11) selon une séquence de charge prédéterminée.

4. Four de frittage (1) pour éléments (9) en matériau fritté, en particulier pour éléments dentaires et en particulier pour éléments en céramique, comprenant une chambre de four pouvant être chauffée (2) pour l'élément (9) à fritter, la chambre de four (2) ayant une section de paroi (6) à ouvrir pour introduire l'élément (9) à fritter dans la chambre de four (2), un dispositif de chauffage (5) étant prévu pour la chambre de four (2) et une commande (11) induisant le chauffage de la chambre de four (2), **caractérisé en ce que** la commande (11) a une séquence de charge prédéterminée avec les étapes d'ouverture, de maintien et de fermeture de la section de paroi (6) chacune avec la chambre du four chauffée et **en ce que** soit les étapes sont effectuées automatiquement soit la séquence des étapes est rendue perceptible par au moins un indicateur de signal (35) et **en ce que** la commande (11) a un profil de température prédéterminé suivant la séquence de charge pour un processus de frittage ultérieur pour la chambre de four (2).

5. Four de frittage selon la revendication 4, **caractérisé en ce que** des moyens d'entraînement (10) sont prévus pour l'ouverture et la fermeture motorisées de la section de paroi (6) et une commande (11) pour les moyens d'entraînement (10) est prévue, laquelle comporte un élément de commande (12) pour les moyens d'entraînement (10) et **en ce qu'**en actionnant l'élément de commande (12) les moyens d'entraînement (10) sont automatiquement actionnés via la commande (11) conformément à la séquence de charge prédéterminée.

6. Four de frittage selon la revendication 4 ou 5, **caractérisé en ce que** la section de paroi (6) à ouvrir est conçue comme une étagère pour l'élément (9) et forme une zone de refroidissement chauffée (21), qui est disposée à distance de la chambre de four (2), dans lequel l'élément (9) disposé sur l'étagère est chauffé par la chambre de four chauffée (2) lorsque la section de paroi (6) est ouverte ou dispose d'un dispositif de chauffage séparé (31), **en ce que** la commande a une séquence de refroidissement pour ouvrir la section de paroi (6) après le processus de frittage et pour maintenir la section de paroi (6) dans la zone de refroidissement (21) et pour déterminer le chauffage de la chambre de four (2) ou du dispositif de chauffage séparé (31) et **en ce qu'**il existe un signal de commande qui peut être activé au moyen de la commande (11), qui indique que la température de refroidissement dans la zone de refroidissement (21) ou dans la chambre de four (2) est atteinte.

7. Four de frittage selon l'une des revendications 1 à 6, **caractérisé en ce que** le dispositif de chauffage (5) après la séquence de charge présente une vitesse de chauffage de la chambre de four (2) d'au moins 1,0 °C/s en moyenne et au plus 6 °C/s comme valeur maximale.

8. Four de frittage selon l'une des revendications 1 à 7, **caractérisé en ce que** la commande (11) présente un moyen de saisie (12) pour sélectionner un profil de température en fonction d'une taille de l'élément (9) ou de caractéristiques géométriques telles qu'une épaisseur de paroi maximale ou une section transversale maximale d'élément ou un volume de l'élément à fritter (9), un type de matériau de l'élément à fritter (9) ou combinaison de plusieurs d'entre eux.

9. Four de frittage selon l'une des revendications 1 à 7, **caractérisé en ce que** la commande (11) comporte un moyen d'évaluation (11.1) pour un code à barres et/ou un autre identifiant lisible par machine avec des informations sur l'élément (9) à fritter, afin de déterminer automatiquement un profil de température en tenant compte d'une épaisseur de paroi maximale de l'élément à fritter (9), d'un volume de l'élément à fritter (9), d'un type de matériau ou d'un type d'élément à fritter (9) ou d'une combinaison de plusieurs d'entre eux.

10. Procédé de frittage d'éléments (9) en matériau fritté, en particulier d'éléments dentaires dans un four de frittage (1), comprenant les étapes suivantes :
a) ouverture d'une section de paroi (6) d'une chambre de four (2) avec une chambre de four (2) préchauffée avec le chauffage de four (5) allumé ;
b) chargement de la chambre de four (2), notamment en disposant l'élément (1) à fritter agencé sur un support (8) à l'extérieur de la chambre de four (2) sur la section de paroi ouverte (6) ;
c) fermeture de la chambre de four (2) ;
d) chauffage de la chambre de four (2) jusqu'à une température de maintien T_{H} pendant une durée HU2 ;
e) maintien de la température de maintien pendant une durée H ;
f) ouverture de la chambre de four (2), soit avec le chauffage du four éteint soit avec le chauffage du four allumé ;
g) pour une première étape de refroidissement, déplacement de l'élément (9) avec le support (8) dans une première zone de refroidissement chauffée (21) et repos pendant une période de refroidissement CD1 ;
h) enlèvement de l'élément (9) du support (8) et déplacement de l'élément (9) dans une autre zone de refroidissement (27) pour l'étape de refroidissement supplémentaire en le plaçant sur une base (26) à température essentiellement ambiante et en resant pendant une durée de refroidissement CD3,
j) dans lequel
- les étapes a)-c) sont effectuées pendant une durée L d'au moins 2 s et d'au plus 2 minutes, de préférence 1 minute ;
- l'étape d) pendant la durée HU2 d'un maximum de 8 minutes, de préférence 4-5 minutes
- l'étape e) pendant la durée H d'un maximum de 15 minutes, de préférence 4-8 minutes ;
- les étapes f) et g) pendant la durée de refroidissement CD1 d'au moins 0,5 minute, mais pas plus de 5 minutes ;
- l'étape h) pendant une durée de refroidissement CD3 d'au moins 0,5 minute, mais pas supérieure à 10 minutes.

11. Procédé selon la revendication 10, **caractérisé en ce qu'**entre la première et l'autre étape de refroidissement pour une deuxième étape de refroidissement, l'élément (9) avec le support (8) est déplacé de la première zone de refroidissement (25) dans une deuxième zone de refroidissement et y séjourne pendant une durée de refroidissement CD2 de 1 à 5 minutes.

12. Procédé selon l'une des revendications 10 ou 11, **caractérisé en ce qu'**un moyen d'évaluation (11.1) pour un code à barres et/ou un autre identifiant lisible par machine avec des informations sur une taille de l'élément (9) ou des caractéristiques géométriques telles qu'une épaisseur de paroi maximale ou une section transversale maximale d'élément ou un volume de l'élément (9) à fritter, un type de matériau de l'élément (9) à fritter ou une combinaison de plusieurs d'entre eux de l'élément (9) à fritter sont évalués automatiquement et **en ce qu'**un profil de température est déterminé automatiquement.

13. Procédé selon la revendication 12, **caractérisé en ce que** les durées respectives des étapes a) à i) sont déterminées automatiquement via les moyens d'évaluation (11.1) à partir d'informations sur l'élément à fritter, en particulier la durée H de l'étape e), dans lequel une épaisseur de paroi maximale de l'élément à fritter, un volume de l'élément à fritter, un type de matériau ou le type d'élément à fritter ou une combinaison de plusieurs d'entre eux sont automatiquement évalués.

14. Procédé selon l'une des revendications 10 à 13, **caractérisé en ce que** la zone de refroidissement chauffée (21) de la première étape de refroidissement est chauffée par le four de frittage (1), notamment par la chambre de four (2).

15. Procédé selon l'une des revendications 10 à 14, **caractérisé en ce que** l'élément (9) à fritter, qui est disposé sur un support (8), est disposé à l'extérieur de la chambre de four (2) sur la section de paroi ouverte (6).

16. Procédé selon l'une des revendications 10 à 15, **caractérisé en ce que** l'on utilise des éléments (9) en céramique oxydée ou vitrocéramique pouvant être frittée, ainsi que des matériaux NEM préparés par métallurgie des poudres, pouvant être frittés, en particulier à base de CoCr, CoCrMo, CoCrWou CoCrMoW.

17. Procédé selon l'une des revendications 10 à 16, **caractérisé en ce que** des éléments de technologie dentaire (9) en oxyde de zirconium et oxyde de zirconium translucide ayant des épaisseurs de paroi de 0,1 à 6 mm sont frittés.

18. Procédé selon l'une des revendications 10 à 17, **caractérisé en ce que** l'épaisseur de paroi dans le cas de couronnes est de 0,3 à 0,8 mm maximum, **en ce que** l'épaisseur de matériau dans le cas de couronnes pleines est de 0,3 à 4 mm maximum et **en ce que** la section du connecteur dans le cas de constructions de type bridge est de 20 mm² maximum.

19. Procédé selon l'une des revendications 10 à 18, **caractérisé en ce que** la température To dans la chambre de four (2) lors de l'étape e) est au moins si élevée qu'un frittage avec un degré de frittage d'au moins 80 % est possible et **en ce que** la température To dans la chambre de four (2) pendant l'étape e) est au maximum telle qu'un changement de phase défavorable au-dessus de la température Tmax est évité.

20. Procédé selon l'une des revendications 10 à 19, **caractérisé en ce que** la température To dans la chambre de four (2) lors de l'étape e) pour un oxyde de zirconium dentaire selon le type basique d'oxyde de zirconium ZrO₂ avec une proportion supplémentaire de 4,5 à 6 % en masse d'oxyde d'yttrium Y₂O₃ est d'au moins 1550 °C et au plus 1600 °C.

21. Procédé selon l'une des revendications 10 à 20, **caractérisé en ce que** la chambre de four (2) a une vitesse de chauffe d'au moins 1,0 °C/s en moyenne et au plus 6 °C/s comme valeur maximale lors de l'étape d).

22. Programme informatique, stocké sur un support lisible par machine avec un code lisible par machine pour exécuter un procédé de contrôle de la température pendant un processus de frittage utilisant un four de frittage, dans lequel la sélection du profil de température pour le processus de frittage de l'élément à fritter est effectuée en fonction de la séquence de charge du four de frittage pour l'élément à fritter selon l'une des revendications 10 à 21.
